# DEMANDE DE BREVET EUROPEEN

(11) **EP 1 216 781 A1**
(43) Date de publication de la demande: **26.06.2002**
(21) Numéro de dépôt: 01403302.1
(22) Date de dépôt: 19.12.2001
(51) Int. Cl.: B23K 20/10

(54) **Dispositif de traitement de la surface d'objets**

(30) Priorité: 20.12.2000 FR 0016691
(71) Demandeur: Centre d'Etudes et Recherche pour l'Automobile ( CERA), 51100 Reims (FR)
(72) Inventeur: Noirot, Daniel, 02350 Liesse Notre Dame (FR)
(74) Mandataire: Nicolle, Olivier

(57) **Abrégé**

L'invention concerne un dispositif (1) de traitement de la surface d'objets (O), notamment de couches de matériaux composites, comportant :
- un organe (4) de traitement à tête (7) à vibrations mécaniques ultrasonores, agencé de manière à traiter la surface de l'objet (O) lorsque la tête (7) lui est appliquée ;
- une enclume (6) de contre-appui de l'objet (O) à traiter ;

Suivant l'invention l'enclume (6) comporte au moins un organe (16) de contre-appui de l'objet (O) à traiter, guidé par rapport à un support (17) dans la direction de déplacement vibratoire de la tête (7), ledit organe (18) étant agencé pour fléchir au contact de la tête (7) animée des vibrations mécaniques ultrasonores tout en assurant un maintien suffisamment ferme de l'objet (O) vers et en face de la tête (7).

## Description

L'invention concerne un dispositif de traitement de la surface d'objets, notamment de coupure - soudure de couches de matériaux composites.

L'invention s'applique notamment aux outils de découpe, de soudure, de découpe avec soudure simultanée en épaisseur et de détourage de couches de matériaux tels que les matériaux synthétiques, les fibres naturelles, le papier, la fibre de verre, les fibres aramides, les matériaux composites, les matériaux thermoplastiques, les matériaux thermodurcissables, les textiles ou autres.

Ces matériaux sont utilisés dans de nombreux domaines techniques, et en particulier dans les véhicules automobiles, par exemple pour décorer, constituer ou renforcer des garnitures intérieures d'automobiles ou pour constituer des parties du compartiment moteur d'automobiles.

Nombre de ces matériaux sont difficiles à traiter mécaniquement, les matériaux traités par les procédés traditionnels étant souvent détériorés, par exemple effilochés, et rendus peu esthétiques.

On connaît des couteaux manuels dits « ultrasonores », dont la lame est soumise à des vibrations mécaniques ultrasonores, qui permettent de découper des matériaux en feuilles ou en plaques. L'utilisateur applique la lame contre le matériau maintenu sur une enclume et déplace la lame par rapport au matériau pour le découper. Toutefois, le traitement ainsi réalisé est peu satisfaisant.

En effet, même si le traitement peut être rapide, il n'est pas précis et ne remplit pas les normes de qualité. La manipulation du couteau entraîne une usure très rapide de la lame et de l'enclume.

L'invention vise à un dispositif de traitement permettant de remédier à ces inconvénients.

L'objet de l'invention est un dispositif de traitement de la surface d'objets, notamment de couches de matériaux composites, comportant :
- un organe de traitement à tête à vibrations mécaniques ultrasonores, agencé de manière à traiter la surface de l'objet lorsque la tête lui est appliquée ;
- une enclume de contre-appui de la tête,
caractérisé en ce que l'enclume comporte :
- au moins un organe de contre-appui de la tête, guidé par rapport à un support dans la direction de déplacement vibratoire de la tête, et
- au moins un organe de précontrainte de l'organe de contre-appui vers la tête, ledit organe étant agencé pour fléchir au contact de la tête animée des vibrations mécaniques ultrasonores tout en assurant un maintient suffisamment ferme de l'objet vers et en face de la tête.

L'invention permet d'effectuer des traitements satisfaisants de matériaux, avec une bonne cautérisation, une bonne précision d'exécution tout en préservant dans une large mesure la durée de vie de l'enclume et de l'organe de traitement. L'organe de traitement et l'enclume peuvent être maintenus face à face durablement avec sécurité et fiabilité en évitant leur dégradation prématurée. L'invention permet d'effectuer les diverses opérations de traitement énoncées sur un grand nombre de matériaux. Lorsque la tête touche l'organe de contre-appui, ce dernier est déplacé par la tête vibrante, en évitant que la tête et l'enclume ne s'endommagent l'une l'autre.

Suivant une réalisation simple, l'organe de précontrainte comprend un ressort de compression, par exemple hélicoïdal.

Suivant une autre réalisation, l'organe de précontrainte comprend un vérin hydraulique ou pneumatique.

Afin d'adapter l'enclume au traitement de différents matériaux, l'enclume comporte des moyens de réglage de l'effort exercé par l'organe de précontrainte sur l'organe de contre-appui.

Dans le cas où l'organe de précontrainte comporte un ressort, les moyens de réglage comprennent une vis de réglage de la compression du ressort.

Dans un premier mode de réalisation, permettant de faire défiler l'objet à traiter sur l'enclume, l'organe de contre-appui comprend un galet monté tournant sur un axe guidé dans le support dans la direction de déplacement vibratoire de la tête et sur la surface duquel est appliqué l'organe de précontrainte.

Dans un deuxième mode de réalisation, permettant de faire défiler l'objet à traiter sur l'enclume suivant plusieurs directions, l'organe de contre-appui comprend une bille guidée dans un évidement du support et sur la surface de laquelle est appliqué l'organe de précontrainte.

Suivant une caractéristique, améliorant le traitement, la distance entre la tête et l'organe de contre-appui est préréglée. Cette distance est par exemple sensiblement nulle. Une faible distance préréglée permet de traiter des objets de toutes épaisseurs entre la tête et l'enclume, mêmes faibles, la tête ayant constamment un contre-appui pour le traitement.

Afin de pouvoir limiter la course de déplacement de l'organe de contre-appui, l'enclume comporte une butée de retenue de l'organe de contre-appui par rapport au support. La tête peut également servir de butée à l'organe de contre-appui dans le cas d'une recherche de coupe ou de coupe - soudure.

Suivant une caractéristique, le dispositif de traitement comporte en outre une table de support de l'objet à traiter, à hauteur de l'organe de contre-appui et à côté de l'enclume, par exemple autour de celle-ci.

Dans une réalisation, l'organe de traitement comporte un générateur d'oscillations électriques et un convertisseur des oscillations électriques en oscillations mécaniques connecté en sortie à la tête, agencés de manière à générer sur la tête des vibrations mécaniques ultrasonores.

Suivant une caractéristique, le convertisseur comporte au moins un élément piézo-électrique dont les bornes électriques de déformation sont connectées à la sortie en oscillations électriques du générateur, et un organe accordé de transformation de la déformation mécanique de l'élément piézo-électrique en vibrations mécaniques ultrasonores de la tête.

Suivant une caractéristique, permettant de régler le fonctionnement de la tête de traitement, l'organe de transformation comporte un moyen de réglage de l'amplitude des vibrations mécaniques ultrasonores.

Suivant une caractéristique, la zone de réglage de l'amplitude des vibrations mécaniques ultrasonores de l'organe de transformation est comprise entre 10 micromètres et 100 micromètres.

Suivant une caractéristique, le générateur est un générateur d'oscillations électriques de fréquence comprise entre 20 kHz et 100 kHz et, par exemple de 20 kHz, 30 kHz, 40 kHz, 50 kHz ou 70 kHz, afin d'utiliser un courant électrique autorisé industriellement.

Afin de pouvoir réaliser à volonté des traitements de différentes puissances, le générateur comprend des moyens de réglage de l'amplitude des oscillations électriques, l'organe de traitement étant agencé pour faire varier l'amplitude des vibrations mécaniques ultrasonores en fonction de celle des oscillations électriques du générateur.

Dans une réalisation permettant d'effectuer un traitement répétitif d'objets, avec un dimensionnement précis, l'organe de traitement et l'enclume sont montés sur un bâti fixe, la tête étant tournée vers l'enclume.

Une autre réalisation, permettant de déplacer manuellement le dispositif par rapport à l'objet à traiter, l'organe de traitement et l'enclume sont montés sur un outil portatif comportant des moyens de préhension, la tête étant tournée vers l'enclume.

Dans les réalisations précédentes, l'organe de précontrainte est par exemple ajustable, afin de pouvoir faire varier la force exercée sur l'organe de contre-appui.

L'invention sera mieux comprise à la lumière de la description qui va suivre, faite en référence aux dessins, donnés uniquement à titre d'exemples et sur lesquels :
- la figure 1 est une vue schématique du dispositif de traitement suivant l'invention, dans un premier mode de réalisation ;
- la figure 2 est un schéma du dispositif de traitement suivant l'invention, dans un deuxième mode de réalisation ;
- la figure 3 est une vue schématique de face et de côté d'un organe de traitement du dispositif suivant l'invention.

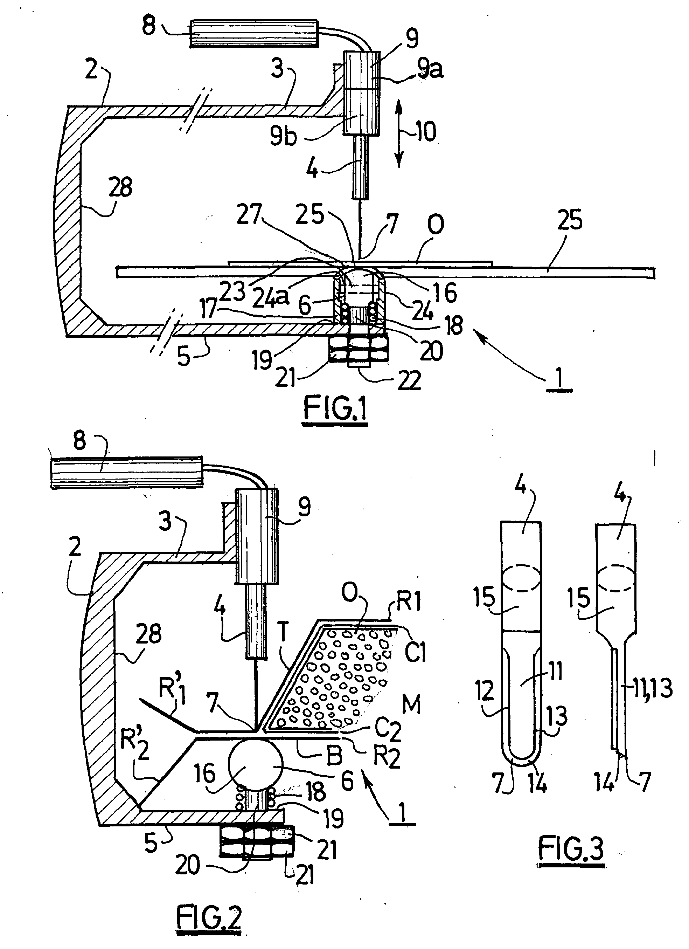

Aux figures 1 et 2, le dispositif 1 de traitement comporte un bâti 2 comportant un bras supérieur 3 de support d'un organe de traitement 4 et un bras inférieur 5 de support d'une enclume 6. Le bâti 2 peut être formé d'un portique ou autre. L'objet O destiné à être traité par le dispositif 1 est placé entre l'organe de traitement 4 et l'enclume 6 face à face.

Dans des réalisations non représentées, l'organe de traitement 4 et/ou l'enclume 6 sont laissés libres.

A la figure 3, l'organe de traitement 4 comporte une tête 7 de traitement apte à être soumise à des vibrations mécaniques ultrasonores afin d'effectuer le traitement de la surface d'un objet O. Ce peut être une découpe de l'épaisseur de l'objet O lorsque la tête 7 est positionnée et soumise à des vibrations telles qu'elles traversent l'épaisseur de l'objet O, ou une soudure de plusieurs couches de l'objet O, lorsque la position de la tête 7 et les vibrations mécaniques auxquelles elle est soumise sont telles que la tête 7 reste à la surface supérieure de l'objet O et apporte de la chaleur par friction. Ce peut être également une découpe avec soudure des couches composant l'épaisseur de l'objet O, lorsque la découpe est effectuée avec apport de chaleur, par exemple par friction. La tête peut également être utilisée pour détourer des objets. L'organe 4 de traitement est par exemple de type « sonotrode ».

L'organe 4 de traitement comporte en outre un générateur 8 d'oscillations électriques, un convertisseur 9 électro-mécanique relié en entrée à la sortie en oscillations électriques du générateur 8 et apte à convertir les oscillations électriques en oscillations mécaniques, afin de produire les vibrations mécaniques de la tête 7.

Le convertisseur 9 électro-mécanique comporte un ou plusieurs éléments piézo-électriques 9a excités par leurs bornes électriques de déformation par les oscillations électriques présentes sur l'entrée du convertisseur 9 et aptes à se déformer mécaniquement. La déformation mécanique des éléments piézo-électriques est transformée par un organe 9b accordé de transformation en vibrations mécaniques de la tête 7. L'organe 4 de traitement est agencé de manière que les vibrations mécaniques de la tête 7 soient produites suivant une direction 10 déterminée, dans les réalisations représentées, verticale. L'organe 9b de transformation comporte un moyen de réglage de l'amplitude des vibrations mécaniques ultrasonores de la tête 7. L'amplitude des vibrations mécaniques ultrasonores est ainsi réglée à une valeur comprise dans une zone de réglage, par exemple dans la zone de réglage comprise entre 10 micromètres et 100 micromètres, selon le traitement souhaité.

A la figure 3, la tête 7 est sous forme d'une lame 11 oblongue suivant la direction déterminée 10, comportant deux bords longitudinaux 12, 13 et un bord inférieur 14 joignant les bords longitudinaux 12, 13 et arrondie. Les bords longitudinaux 12, 13 et le bord inférieur 14 sont biseautés, par exemple pour procurer un tranchant.

La lame 11 est fixée à un corps 15 soumis aux vibrations mécaniques ultrasonores provenant de l'organe 9b de transformation et transmettant celles-ci à la lame 11. La lame 11 peut également être d'une seule pièce avec le corps 15. Le bord inférieur 14 de la lame 11 est destiné au traitement de la surface de l'objet O. Les vibrations mécaniques ultrasonores font se déplacer le bord inférieur 14 suivant la direction déterminée 10, par exemple par rapport à un point médian de la lame 11 et du corps 15 par déformation volumique et sont par exemple sinusoïdales.

L'enclume 6 comporte un organe 16 de contre-appui guidé par rapport à un support 17 faisant partie de l'enclume et fixé au bras inférieur 5. L'organe 16 de contre-appui est guidé suivant la direction 10 déterminée de vibrations mécaniques de la tête 7 dans un évidement prévu dans le support 17. La surface de contre-appui de l'enclume 6 pour la tête 7 de traitement est prévue sur l'organe 16 de contre-appui. Un organe 18 de précontrainte est prévu dans le support 17 pour précontraindre l'organe 16 de contre-appui vers la tête 7 de l'organe de traitement 4. L'organe 16 de contre-appui et l'organe 18 de précontrainte sont agencés de telle sorte que pendant le traitement, l'énergie apportée par la tête 7 soit dissipée dans une large mesure dans l'objet O afin d'effectuer son traitement, tandis qu'un maintien suffisamment ferme vers et en face de la tête 7 est procuré par l'organe 16 de contre-appui à l'objet O. Les vibrations mécaniques ultrasonores de la tête 7, l'organe 16 de contre-appui et l'organe 18 de précontrainte sont agencés de telle sorte que, pendant le traitement, l'organe 16 de contre-appui soit en décalage de phase par rapport aux vibrations de la tête 7.

Dans les réalisations représentées, l'organe de précontrainte 18 comprend un ressort hélicoïdal logé entre l'organe 16 de contre-appui et une surface inférieure 19 fixe par rapport au support 17, par exemple formée par le bras inférieur 5. Le ressort 18 est enfilé autour d'une broche 20 centrale de l'enclume 6 prévue sous l'organe 16 de contre-appui et permettant par exemple la fixation de l'enclume 6 sur le bras 5 par des écrous 21 vissés sur une partie extrême filetée 22 de la broche 20 traversant un trou du bras 5. Le ressort 18 est comprimé sur toute la plage de déplacement de l'organe 16 de contre-appui dans le support 17. L'organe 18 de précontrainte, notamment le coefficient de raideur du ressort, 18 est choisi en fonction du ou des matériaux de l'objet O à traiter. Les écrous 21 permettent par exemple d'ajuster la force exercée par le ressort 18 sur l'organe d'appui 16, en modifiant la distance entre les extrémités du ressort 18. En variante, non représentée, une cale déplaçable par vis peut également être prévue sous le ressort pour faire varier la distance entre ses extrémités.

A la figure 1, l'organe 16 de contre-appui comporte un galet monté tournant sur un axe 23 monté coulissant par ses extrémités dépassant du galet dans des rainures 24 ménagées dans les parois intérieures du support 17. Le galet dépasse d'une ouverture du support 17 tournée vers la tête 7, les extrémités de l'axe 23 étant retenues par des butées 24a dans le support 17 à l'encontre de l'organe 18 de précontrainte. Le ressort 18 de compression est appliqué sur la surface de roulement 25 du galet 16, sur sa partie éloignée de celle tournée vers la tête 7. Dans une variante non représentée, le ressort de compression est appliqué sur l'axe 23 du galet.

A la figure 2, l'organe 16 de contre-appui comprend une bille reposant sur un siège formé par une extrémité de la broche 20, le ressort 18 de compression étant enfilé autour de la broche 20 entre le bras 5 et la bille. Une paroi non représentée de l'enclume 6 peut être prévue pour laisser dépasser la bille vers la tête 7 et la retenir à l'encontre de l'organe 18 de précontrainte.

Des moyens sont prévus pour que la distance entre la tête 7 et l'organe 16 de contre-appui soit préréglée et soit inférieure à l'épaisseur de l'objet O à traiter localement entre la tête 7 et l'enclume 6. Cette distance est par exemple nulle, la tête 7 touchant l'organe 16 de contre-appui en l'absence de l'objet O, l'objet O pouvant passer entre la tête 7 et l'organe 16 de contre-appui par abaissement de ce dernier et flexion de l'organe 18 de précontrainte. L'organe 18 de précontrainte est tel qu'il fléchit également au contact de la tête 7 animée des vibrations mécaniques ultrasonores. En l'absence d'objets O et de vibrations de la tête 7, l'organe 18 de précontrainte est par exemple tel qu'il n'exerce pas de force sur la tête 7. La distance entre la tête 7 et l'enclume 6 peut être momentanément augmentée pour permettre l'insertion de l'objet à traiter, puis ramenée à son réglage prévu pour effectuer le traitement souhaité, des moyens étant prévus à cet effet sur le bâti 2 et/ou les bras 3, 5.

La figure 3 montre la coupure-soudure pour la fabrication d'une tablette arrière O de véhicule automobile, représentée en coupe à plus grande échelle que le dispositif 1. Un revêtement R1, par exemple une moquette, est collé par l'intermédiaire d'un film de colle C1 sur la surface supérieure et la tranche T d'une âme en mousse M de la tablette, tandis qu'un autre revêtement R2, par exemple en non-tissé, est collé par l'intermédiaire d'une colle C2 sur la face inférieure de cette âme. Les revêtements R1 et R2 dépassent de l'âme M et sont insérés parallèlement au bord B où ils se rejoignent, entre la tête 7 et l'organe 16 de contre-appui. L'application de vibrations mécaniques ultrasonores d'amplitude et de fréquence adéquates par la tête 7 aux revêtements R1 et R2 permet de souder ces derniers sur le bord B du côté de l'âme en mousse M et à la fois de les sectionner du côté R'1, R'2 des revêtements R1 et R2, dépassant du bord B. Les bavures habituellement présentes sur les bords des revêtements sont ainsi supprimées, et la soudure réalisée est propre. Il est aisé de faire suivre à la soudure le contour du bord B de la tablette en déplaçant la tablette et le dispositif 1 l'un par rapport à l'autre suivant ce bord. En outre, on réalise simultanément une découpe du matériau superflu. Le dispositif suivant l'invention permet ainsi la finition soignée de pièces.

D'autres modes de fonctionnement du dispositif sont possibles, en réglant l'amplitude des vibrations de la tête 7 et en choisissant leur fréquence par choix du générateur 8 de fréquence fixe. Le générateur 8 comporte des moyens de réglage non représentés de l'amplitude des oscillations électriques, permettant de faire varier, par l'intermédiaire du convertisseur 9 électro-mécanique l'amplitude des vibrations mécaniques ultrasonores de la tête 7. Ainsi la tête 7 peut être réglée pour effectuer une soudure de plusieurs couches de matériaux, une découpe d'une ou plusieurs couches de matériaux, une découpe de plusieurs couches de matériaux avec soudure simultanée sur les bords de la découpe.

Une table 26 est prévue pour la pose de l'objet O dessus. La table 26 comporte une ouverture 27 pour le passage de l'organe de contre-appui 16 et de la tête 7.

Le bâti 2 peut être immobilisé avec l'organe de traitement 4 et l'enclume 6 et l'objet O déplacé par rapport à ceux-ci pour son traitement. Dans ce cas, le déplacement de l'objet O est effectué soit par rapport à la table 26 maintenue également fixe, soit par déplacement de la table 26 avec l'objet O pouvant être fixé dessus, l'ouverture 27 étant prévue de manière correspondante.

Dans une autre application, le dispositif de traitement 1 est portatif et comporte des moyens de préhension permettant de le déplacer par rapport à un objet O fixe. Les moyens de préhension sont par exemple formés par la traverse 28 du bâti 2, sur laquelle sont fixées les bras 3, 5. Dans le cas d'une découpe, l'utilisateur déplace par exemple le dispositif 1, par exemple en avançant la tête 7 vers un bord de l'objet O et en maintenant le bâti 2 derrière la découpe effectuée, à la manière d'une paire de ciseaux.

Mais le bâti 2 peut être également déplacé latéralement par rapport à la zone de traitement de l'objet, les bras 3 et 5 étant prévus avec une longueur adéquate pour laisser passer l'objet O.

## Revendications

1. Dispositif (1) de traitement de la surface d'objets (O), notamment de coupure - soudure de couches de matériaux composites, comportant :
- un organe (4) de traitement à tête (7) à vibrations mécaniques ultrasonores, agencés de manière à traiter la surface de l'objet (O) lorsque la tête (7) lui est appliquée ;
- une enclume (6) de contre-appui de la tête (7) ;
**caractérisé en ce que** l'enclume (6) comporte :
- au moins un organe (16) de contre-appui de la tête (7), guidé par rapport à un support (17) dans la direction (10) de déplacement vibratoire de la tête (7) ; et
- au moins un organe (18) de précontrainte de l'organe (16) de contre-appui vers la tête (7), ledit organe (18) étant agencé pour fléchir au contact de la tête (7) animée des vibrations mécaniques ultrasonores tout en assurant un maintien suffisamment ferme de l'objet (O) vers et en face de la tête (7).

2. Dispositif (1) de traitement suivant la revendication 1, **caractérisé en ce que** l'organe (18) de précontrainte comprend un ressort de compression, par exemple hélicoïdal.

3. Dispositif (1) de traitement suivant la revendication 1, **caractérisé en ce que** l'organe (18) de précontrainte comprend un vérin hydraulique ou pneumatique.

4. Dispositif (1) de traitement sur l'une quelconque des revendications précédentes, **caractérisé en ce que** l'enclume comporte des moyens (20, 21, 22) de réglage de l'effort exercé par l'organe (18) de précontrainte sur l'organe (16) de contre-appui.

5. Dispositif (1) de traitement suivant les revendications 2 et 4, **caractérisé en ce que** les moyens (20, 21, 22) de réglage comprennent une vis de réglage de la compression du ressort (18).

6. Dispositif (1) de traitement sur l'une quelconque des revendications précédentes, **caractérisé en ce que** l'organe (16) de contre-appui comprend un galet monté tournant sur un axe (23) guidé dans le support (17) dans la direction (10) de déplacement vibratoire de la tête (7), sur la surface ou l'axe (23) duquel est appliqué l'organe (18) de précontrainte.

7. Dispositif (1) de traitement suivant l'une quelconque des revendications 1 à 5, **caractérisé en ce que** l'organe (16) de contre-appui comprend une bille guidée dans un évidement du support (17) et sur la surface de laquelle est appliqué l'organe (18) de précontrainte.

8. Dispositif (1) de traitement suivant l'une quelconque des revendications précédentes, **caractérisé en ce que** la distance entre la tête (7) et l'organe (16) de contre-appui est préréglée et est par exemple sensiblement nulle.

9. Dispositif (1) de traitement selon l'une quelconque des revendications précédentes, **caractérisé en ce que** l'enclume (6) comporte une butée (24) de retenue de l'organe (16) de contre-appui par rapport au support (17).

10. Dispositif (1) de traitement selon l'une quelconque des revendications précédentes, **caractérisé en ce que** le dispositif (1) comporte en outre une table (26) de support de l'objet (O) à traiter, à hauteur de l'organe (16) de contre-appui et à côté de l'enclume (6), par exemple autour de celle-ci.

11. Dispositif (1) de traitement selon l'une quelconque des revendications précédentes, **caractérisé en ce que** l'organe (4) de traitement comporte un générateur (8) d'oscillations électriques et un convertisseur (9) des oscillations électriques en oscillations mécanique connecté en sortie à la tête (7), agencés de manière à générer sur la tête (7) des vibrations mécaniques ultrasonores.

12. Dispositif (1) de traitement suivant la revendication 11, **caractérisé en ce que** le convertisseur (9) comporte au moins un élément piézo-électrique (9a), dont les bornes électriques de déformation sont connectées à la sortie en oscillations électriques du générateur, et un organe (9b) accordé de transformation de la déformation mécanique de l'élément piézo-électrique en vibrations mécaniques ultrasonores de la tête (7).

13. Dispositif (1) de traitement suivant la revendication 12, **caractérisé en ce que** l'organe de transformation (9b) comporte un moyen de réglage de l'amplitude des vibrations mécaniques ultrasonores.

14. Dispositif (1) de traitement suivant la revendication 13, **caractérisé en ce que** la plage de réglage de l'amplitude des vibrations mécaniques ultrasonores de l'organe (9b) de transformation est comprise entre 10 micromètres et 100 micromètres.

15. Dispositif (1) de traitement suivant l'une quelconque des revendications 11 à 14, **caractérisé en ce que** le générateur (8) est un générateur d'oscillations électriques de fréquence comprise entre 20 kHz et 100 kHz, et par exemple de 20 kHz, 30 kHz, 40 kHz, 50 kHz ou 70 kHz.

16. Dispositif (1) de traitement suivant l'une quelconque des revendications 11 à 15, **caractérisé en ce que** le générateur (8) comprend des moyens de réglage de l'amplitude des oscillations électriques, l'organe (4) de traitement étant agencé pour faire varier l'amplitude des vibrations mécaniques ultrasonores en fonction de celle des oscillations électriques du générateur (8).

17. Dispositif (1) de traitement suivant l'une quelconque des revendications précédentes, **caractérisé en ce que** l'organe (4) de traitement et l'enclume (6) sont montés sur un bâti (2) fixe, la tête (7) étant tournée vers l'enclume (6).

18. Dispositif (1) de traitement suivant l'une quelconque des revendications 1 à 13, **caractérisé en ce que** l'organe (4) de traitement et l'enclume (6) sont montés sur un outil portatif comportant des moyens de préhension, la tête (7) étant tournée vers l'enclume (6).
